# EUROPÄISCHE PATENTSCHRIFT

(11) **EP 1 093 980 B1**
(45) Veröffentlichungstag und Bekanntmachung des Hinweises auf die Patenterteilung: **03.04.2002**
(21) Anmeldenummer: 99121009.7
(22) Anmeldetag: 21.10.1999
(51) Int. Cl.: B60R 21/34, B62D 25/10

(54) **Motorhaube für Kraftfahrzeuge zum Schutz von Fussgängern**
Bonnet for motor vehicles with pedestrian protection
Capot de véhicules automobiles avec protection des piétons

(43) Veröffentlichungstag der Anmeldung: 25.04.2001
(73) Patentinhaber: Ford Global Technologies, Inc., A subsidiary of Ford Motor Company, Dearborn, Michigan 48126 (US)
(72) Erfinder: Röth, Thilo, 52064 Aachen (DE); Veith, Bettina, 66424 Homburg (DE); Staines, Bradley, Benfleet, Essex SS7 4AD (GB)
(74) Vertreter: Messulam, Alec Moses

(56) Entgegenhaltungen:
- US-A- 5 115 878
- PATENT ABSTRACTS OF JAPAN vol. 017, no. 555 (M-1492), 6. Oktober 1993 (1993-10-06) & JP 05 155356 A (TOYOTA MOTOR CORP), 22. Juni 1993 (1993-06-22)
- PATENT ABSTRACTS OF JAPAN vol. 1996, no. 07, 31. Juli 1996 (1996-07-31) & JP 08 080873 A (NISSAN MOTOR CO LTD), 26. März 1996 (1996-03-26)

## Beschreibung

Die Erfindung bezieht sich auf eine Motorhaube für Kraftfahrzeuge, die zum Schutz von Fussgängern bei einer Kollision mit einem Kraftfahrzeug eine deformierbare Kopfaufprallzone aufweist gemäss dem Oberbegriff des Anspruches 1.

Bei der Kollision eines Fussgängers mit einem Kraftfahrzeug rührt ein beträchtlicher Teil der schweren oder gar tödlichen Verletzungen daher, dass der Fussgänger mit dem Kopf auf die Motorhaube prallt. Um dieses Verletzungsrisiko so gering wie möglich zu halten, muss die Motorhaube im Bereich des Kopfaufpralls kontrolliert nachgiebig ausgeführt sein. Aus der US 5 706 908 A ist eine Motorhaube bekannt, die unter dem Aussenblech einen energieabsorbierenden Aufprallkörper aufweist. Die Motorhaube ist dabei konstruktiv so ausgelegt, dass die beim Aufprall auf Komponenten im Motorraum erzeugte Energie gemäss einer idealen aufprallenergieabsorbierenden Verformung des äusseren Motorhaubenbleches absorbiert wird. Als Nachteil ist hier zu sehen, das immer ein zusätzlicher Aufprallkörper benötigt wird und die Energieaufnahme hauptsächlich durch lokale plastische Deformation erfolgt.

Aus der gattungs bildenden JP 05 155 355 A ist eine Motorhaube bekannt, die durch regelmässig angeordnete Verstärkungsprofile so versteift ist, dass sie im Falle eines Kopfaufpralles gezielt plastisch deformiert. Die steifen Knotenpunkte der Verstärkungsprofile sind durch Löcher und Ausschnitte geschwächt, um Steifigkeitsspitzen in diesen Bereichen zu reduzieren.

Nachteil ist auch hier, dass die Aufprallenergie nur in Form von lokaler plastischer Verformung absorbiert wird. Dies führt dazu, dass die Motorhaube in der Mitte aufgrund der zusätzlichen elastischen Nachgiebigkeit sich wesentlich weicher verhält als an den unterstützten Rändern.

Aufgabe der Erfindung ist es deshalb, eine Motorhaube zu schaffen, die bei einem Kopfaufprall auf eine beliebige Stelle auf der Motorhaube immer eine im wesentlichen ähnliche Steifigkeit aufweist, um ein gleichmässiges Deformationsverhalten unter Berücksichtigung minimaler Eindringparameter über der gesamten Motorhaube zu realisieren.

Diese Aufgabe wird durch die Merkmale des Anspruches 1 gelöst.

Weitere, die Erfindung vorteilhaft ausgestaltende Merkmale sind in den Unteransprüchen aufgeführt.

Die gemäss Anspruch 1 erfindungsgemäss ausgeführte Motorhaube weist in der Mitte eine relativ hohe Biegesteifigkeit auf. Im Falle eines Kopfaufpralles in diesem Bereich überträgt sich der Impuls des Aufpralles auf den grössten Teil der Motorhaube, d.h., fast die gesamte Masse der Motorhaube wirkt dem Aufprall entgegen und führt so zur gewünschten Verzögerung. Bei einem Kopfaufprall am Rande der Motorhaube oder zu den Auflager hin verhält sich die Motorhaube a priori wesentlich steifer, da die nahen Auflager eine quasi starre Unterstützung bilden. In diesen Bereichen ist die Motorhaube deshalb mit einer geringeren Biegesteifigkeit ausgeführt, wodurch die Energie des Kopfaufpralles nur auf einen kleinen Teil der Motorhaube geleitet wird. Dies führt zu einer kleineren Verzögerung aufgrund der Massenträgheit der Haube und kompensiert damit das steife Verhalten der Motorhaube an den Auflager. Direkt an den Auflagern gilt die Auslegung nach Anspruch 1 nicht. Hier sind geeignete plastische Deformationselemente vorzusehen, die im Falle eines Kopfaufpralles eine genügend weiche Verzögerung bewirken.

Aus der beschriebenen Funktion der Motorhaube ergibt sich folgender Verlauf der Biegesteifigkeiten: Neben den Auflagern überwiegend kleiner oder gleich einem ersten Wert B1, in der Mitte überwiegend grösser oder gleich einem zweiten Wert B2 und in den dazwischenliegenden Bereichen überwiegend grösser als der Wert B1 und kleiner als der Wert B2. Dieser prinzipielle Verlauf der Biegesteifigkeiten lässt sich auf verschiedene konstruktive Weisen umsetzen.

Bei einem konstanten Abstand von Aussen- und Verstärkungsschale kann die Anpassung der Biegesteifigkeit erreicht werden über die Verteilung der Schalendicken. Die Summe aller Schalendicken ist dann in der Mitte grösser als an den Rändern, und an den Rändern wiederum grösser als in den Bereichen direkt neben den Auflagern.

Durch die Anpassung der Abstände von Aussen- und Verstärkungsschale im Bereich der Kopfaufprallzone kann ebenfalls die aus Anspruch 1 bekannte Biegesteifigkeitsverteilung erreicht werden. Für den Abstand der Verstärkungsschale wird deren innere Hüllkurve zugrundegelegt. Neben den Auflagern ergibt sich dann ein kleiner Abstand der Schalen. An zwischen den Auflagern liegenden Rändern steigt dieser Wert an und der grösste Abstand wird erreicht in der Mitte der Motorhaube.

Eine weitere Anpassung der Biegesteifigkeiten kann erfolgen über die Elastizitätsmodule der Schalenmaterialien, vor allem bei der Verwendung von Kunststoffen oder Faserverbundwerkstoffen. Neben den Auflagern ist dann ein Material mit geringem Elastizitätsmodul einzusetzen, während im mittleren Bereich der Motorhaube ein Material mit hohem Elastizitätsmodul zum Einsatz kommt.

Bei der heute üblichen Blechbauweise von Motorhauben sind die Verstärkungsschalen mit Sicken ausgeführt. Die Sicken weisen an der Aussenschale anliegende Flansche auf, an denen die Verstärkungsschale mit der Aussenschale verbunden ist. Auch hier wird der Biegesteifigkeitsverlauf aus Anspruch 1 angewendet. Da die Sicken diskrete Einzelstreifen darstellen, was eine Berechnung der Motorhauben-Biegesteifigkeit erschwert, erfolgt die Bestimmung der Biegesteifigkeit der Motorhauben ersatzweise über die Eigensteifigkeiten der Sicken. Dies ist zulässig, da die vorteilhafte Ausgestaltung der Motorhaube viele regelmässig verteilte Sicken erfordert. Der Biegesteifigkeitsverlauf aus Anspruch 1 wird dann erreicht durch die Anpassung der Biegesteifigkeit einer jeden einzelnen Sicke. Diese bestimmt sich an einem senkrechten Schnitt zur neutralen Faser der Sicke, wobei für die Berechnung alle in diesem Schnitt vorhandene tragenden Schalen berücksichtigt werden. Die neutrale Faser einer Sicke ergibt sich zwischen zwei Knotenpunkten von Sicken, wobei die Knotenpunkte dadurch definiert sind, dass mehr als zwei Sicken zusammenlaufen.

Bei einer Verstärkungsschale mit Sicken kann die Anpassung der Biegesteifigkeit nach Anspruch 1 auch über die Breite der Sicken erfolgen. Dazu werden die Sicken neben den Auflagern mit einer sehr geringen Breite ausgeführt. An den Rändern der Motorhaube zwischen den Auflagern weist diese Breite einen höheren Wert auf und in der Mitte der Motorhaube ist die Breite der Sicken am grössten.

Vorteilhaft sind die Sicken als Hutprofile ausgeführt, wobei die Profilflansche mit der Aussenschale verbunden sind. Die Knotenpunkte der Sicken im Bereich der Kopfaufprallzone werden überwiegend aus drei ineinanderlaufenden Sicken gebildet. Beide, das Hutprofil der Sicken und die Knotenpunkte mit den drei ineinanderlaufenden Sicken, führen zu einer gleichmässigen Unterstützung der Aussenschale. Damit werden Steifigkeitsspitzen auf der Motorhaube vermieden.

Dies wirkt sich vorteilhaft beim Kopfaufprall aus, da überall im Kopfaufprallbereich eine quasi gleiche Motorhaubenstruktur vorhanden ist.

Für die vorteilhafte Ausgestaltung der Motorhaube ist weiterhin eine annähernd homogene Massenverteilung aller Schalen erforderlich. Dies bedeutet, dass alle Teilflächen, die beim Kopfaufprall beaufschlagt werden, eine ähnliche Masse aufweisen. Bezugsmass für jede Teilfläche ist das gemittelte Flächengewicht der Motorhaube, welches sich ergibt aus der Masse der Motorhaube ohne Auflager geteilt durch die äussere Abwicklung der Motorhaube. Für die Grösse einer Teilfläche wird eine Bezugsfläche definiert, die sich aus dem Kopfaufprall ergibt. Die Bezugsfläche ist ein Kreis vom Durchmessers eines Kopfes mit 25 cm. Aus jeder so zu bildenden Teilfläche wird das Flächengewicht bestimmt, indem eine senkrechte Projektion der aufliegenden Teilfläche auf der Aussenschale der Motorhaube gebildet wird und die Masse aller darunterliegenden Schalen ermittelt und durch die Bezugsfläche geteilt wird. Das so erhaltene Flächengewicht der Teilfläche soll vom gemittelten Flächengewicht der Motorhaube um höchstens 20 % abweichen.

Zur besseren Anpassung an den Biegesteifigkeitsverlauf und an die homogene Massenverteilung können einzelne Bereiche der Motorhaube auch mit zusätzlichen Stützschalen versehen sein, die zwischen Verstärkungsschale und Aussenschale angeordnet sind und diese kraftschlüssig verbinden. Bei der Verwendung von homogenen Stützschalen, wie Kunststoffschäumen oder Metallwaben, kann eine homogene Massenverteilung durch die Anpassung der Stützschalenmaterialien erreicht werden. Dazu weist das Material der Stützschale unterschiedliche Dichten wie folgt auf: In der Mitte der Motorhaube überwiegend eine geringe, neben den Auflagern eine überwiegend hohe und an zwischen den Auflagen liegenden Rändern und zwischen den Auflagen und der Mitte der Motorhaube eine mittlere Dichte.

Weitere Erklärungen und Ausführungsbeispiele der Erfindung werden nachfolgend anhand der Zeichnungen erläutert. Die Zeichnungen zeigen dabei in
- Fig. 1: eine Darstellung der Kopfaufprallzone auf der Motorhaube;
- Fig. 2: einen schematischen Biegesteifigkeitsverlauf über die Motorhaube;
- Fig. 3: einen Verlauf der Schalendicken im Querschnitt der Motorhaube;
- Fig. 4: einen Verlauf der Schalenabstände im Querschnitt der Motorhaube;
- Fig. 5: einen Verlauf der Sickenbreiten über den Querschnitt einer Motorhaube;
- Fig. 6: eine Draufsicht auf eine Motorhaube mit einer Verstärkungsschale mit Sicken;
- Fig. 7: einen senkrechten Schnitt zu einer Sicke;
- Fig. 8: einen Querschnitt durch eine Motorhaube mit zusätzlicher Stützschale;
- Fig. 9: einen Querschnitt durch eine Motorhaube mit homogener Stützschale unterschiedlicher Dichte und
- Fig. 10: eine Ansicht der Motorhaube zur Bestimmung der homogenen Massenverteilung.

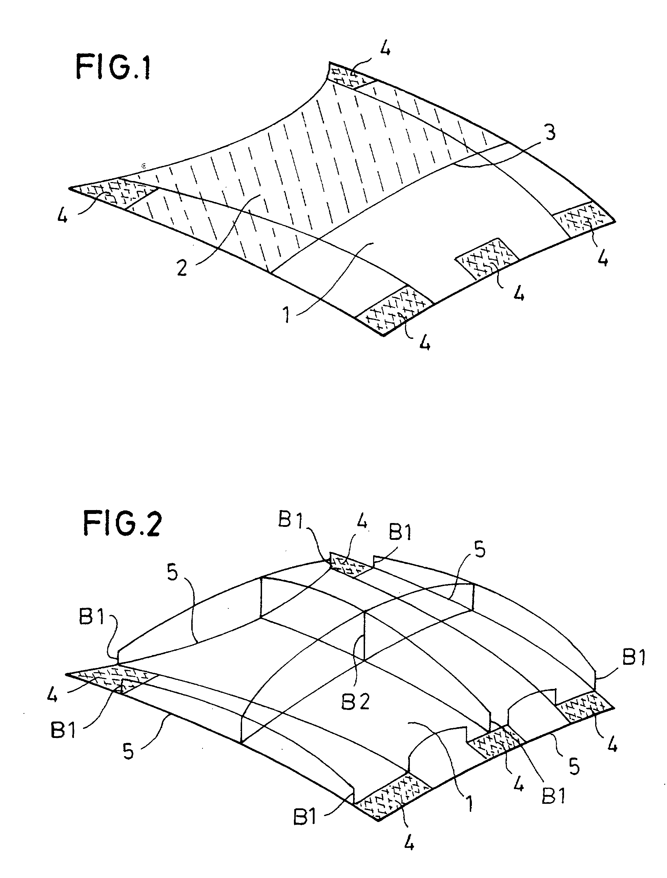

In Fig. 1 ist für eine Motorhaube 1 der typische Kopfaufprallbereich 2 gezeigt. Je nach Fahrzeugtyp ist dabei die vordere Kante 3 des Kopfaufprallbereiches mehr oder weniger nach vorne gerückt. Weiterhin gezeigt sind die Auflagerbereiche 4, wo beim Kopfaufprall die Motorhaube 1 sehr steif unterstützt ist. Dies ist überall dort der Fall, wo Haubenscharniere, Schlösser und Anschlagpuffer unter der Motorhaube 1 angeordnet sind.

Der prinzipielle Verlauf der Biegesteifigkeiten über die Motorhaube 1 ist in Fig. 2 dargestellt. Neben den Auflagerbereichen 4 weist die Biegesteifigkeit etwa den Wert B1 auf, in der Mitte ist sie überwiegend grösser oder gleich dem Wert B2 und in den übrigen Bereichen überwiegend grösser als der Wert B1 und kleiner als der Wert B2. Dabei ist der Verlauf der Steifigkeiten weitestgehend stetig.

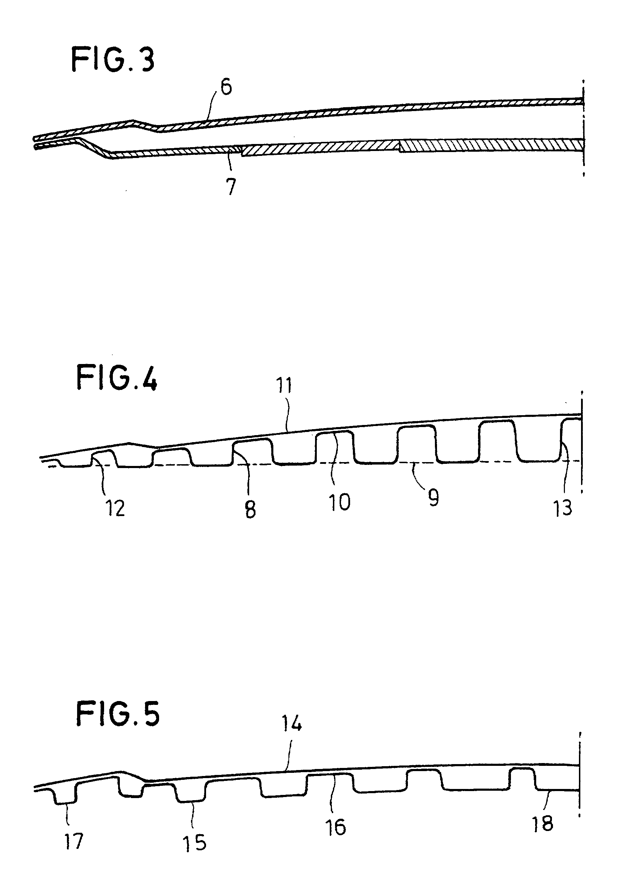

In Fig. 3 bis 5 ist anhand von Querschnitten durch die Motorhaube gezeigt, wie die Anpassung der Biegesteifigkeiten erfolgen kann. Fig. 3 stellt eine Aussenschale 6 und eine Verstärkungsschale 7 dar, wobei 7 einen veränderlichen Dickenverlauf aufweist. Die Innenschale 7 setzt sich aus Blechen drei verschiedener Dicken zusammen. Dies kann erreicht werden durch Verschweissen der verschiedenen Blechdicken wie bei sogenannten Taylor Welded Blanks oder durch lokales Aufkleben einzelner Dopplerbleche. Dabei ist die Blechdicke am Rand am geringsten und in der Mitte der Motorhaube am grössten. Ein stetiger Dickenverlauf ohne Sprünge kann sowohl für Innen- als auch für Aussenschale mit einem Bauteil aus Kunststoff oder Faserverbundwerkstoff realisiert werden.

Die Verstärkungsschale 8 in Fig. 4 ist mit regelmässigen Sicken 9, die alle die gleiche Breite aufweisen, ausgesteift. An den oberen Sickenflanschen 10 ist sie mit der Aussenschale 11 verbunden. Die Anpassung der Biegesteifigkeit erfolgt über die Höhe der Sicken 9: Am Rand der Motorhaube ist die Höhe 12 gering, während die Höhe 13 in der Mitte der Motorhaube am grössten ist.

Der Schnitt durch die Motorhaube in Fig. 5 zeigt den prinzipiell gleichen Aufbau wie in Fig. 4. Aussenschale 14 und Verstärkungsschale 15 sind über die Sickenflansche 16 verbunden. Die Anpassung der Biegesteifigkeiten erfolgt über die Breite der Sicken: Am Rand der Motorhaube ist die Sickenbreite 17 gering und in der Mitte der Motorhaube ist die Sickenbreite 18 am grössten.

Die Anpassung der Biegesteifigkeit kann auch über eine beliebige Kombination von Fig. 3, 4 und 5 erfolgen.

Bild 6 zeigt eine Verstärkungsschale 19 für eine Motorhaube in einer heute üblichen Blechbauweise für Kraftfahrzeuge. Die Aussenschale der Motorhaube, die mit der Verstärkungsschale 19 verbördelt und verklebt ist, ist hier nicht dargestellt. Im Falle eines Kopfaufpralles wirken als Auflager die Scharnierbereiche 20, der Schlossbereich 21 und der Bereich der Anschlagpuffer 22. Zusätzlich sind in der Verstärkungsschale 19 plastische Deformationsbereiche 23 über den Federbeindomen vorgesehen. Damit wird erreicht, dass bei einem Kopfaufprall in diesen Bereichen die Energie vom Aufprall auf den quasi starren Federbeindom durch die Deformationselemente absorbiert wird.

Das Sickenbild der Verstärkungsschale 19 setzt sich aus vielen Einzelsicken zusammen, wie beispielhaft im Schnitt AA für die Sicke 24 dargestellt. Dieser Schnitt ist senkrecht zur gedachten neutralen Faser 25 der Sicke 24. Die neutrale Faser 25 ergibt sich als Verbindungslinie der Knotenpunkte 26, wobei Knotenpunkte so definiert sind, dass drei oder mehr Sicken ineinanderlaufen.

Bedingt durch ihre Geometrie wirken die Knotenpunkte als steife örtliche Verstärkung, was im Kopfaufprallbereich möglichst vermieden werden soll. Dementsprechend weist das Sickenbild der Motorhaube vorwiegend Knotenpunkte mit drei Sicken auf.

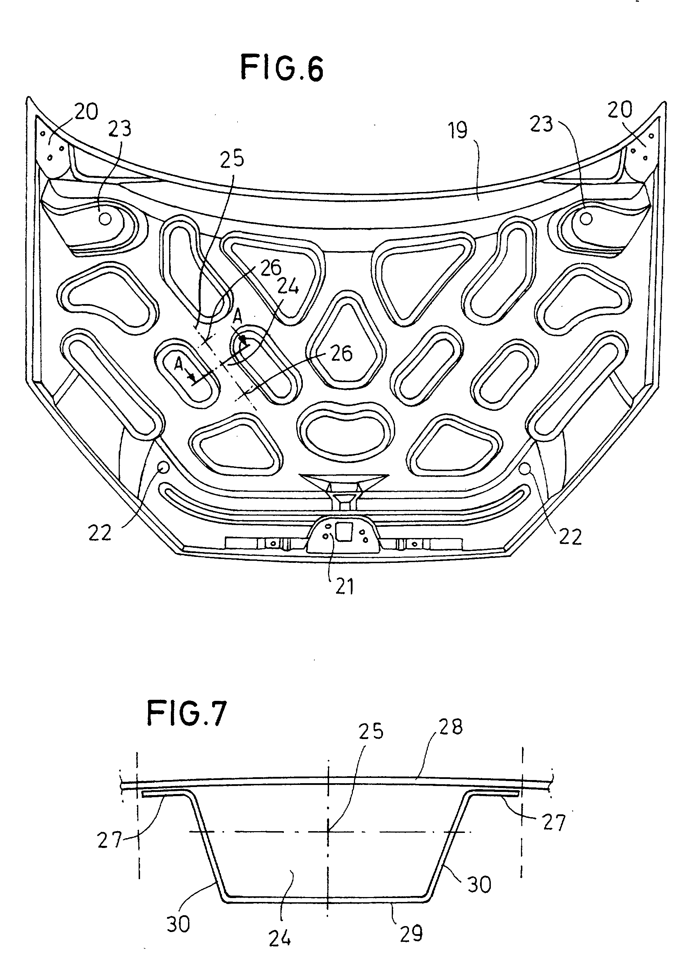

In Fig. 7 ist die Sicke 24 im Querschnitt senkrecht zur neutralen Faser 25 dargestellt. Über die Sickenflansche 27 ist die Verstärkungsschale 19 mit der Aussenschale 28 verklebt. Die Breite der Sicke 24 ergibt sich aus den Abmessungen des Sickenbodens 29 und die Höhe aus den Abmessungen der Sickenstege 30. Zusammen mit den Dicken der Aussenschale 28 und der Verstärkungsschale 19 lassen sich mit diesen Abmessungen die Biegesteifigkeit für die Sicke in diesem Schnitt bestimmen. Zur Anpassung der Biegesteifigkeiten an den geforderten Verlauf aus Anspruch 1 wird nun die so ermittelte Biegesteifigkeit der Einzelsicke herangezogen.

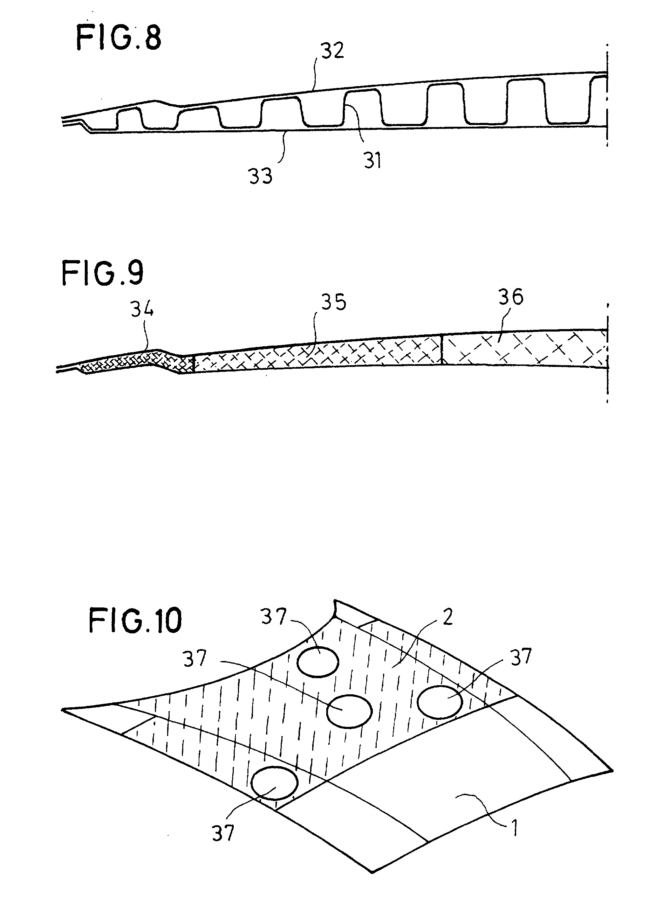

Fig. 8 zeigt einen Querschnitt durch eine Motorhaube mit einer zusätzlichen Stützschale 31, die die Aussenschale 32 und die Verstärkungsschale 33 verbindet. Da die Stützschale im wesentlichen eine stützende Funktion erfüllt, kann sie als dünnwandige Schale, versteift durch Sicken oder Näpfe oder auch als homogene Schale aus einem spezifisch leichten Material ausgeführt sein.

In Fig. 9 ist eine homogene Stützschale mit angepasster Massenverteilung gemäss Anspruch 10 im Querschnitt für eine Motorhaube gezeigt. Dazu ist die Stützschale dreigeteilt: Im Randbereich der Motorhaube weist die Stützschale 34 eine hohe spezifische Dichte auf, im inneren Bereich 35 eine mittlere spezifische Dichte und in der Mitte der Motorhaube 36 eine geringe spezifische Dichte.

Die Fig. 10 zeigt, wie für den Kopfaufprallbereich 2 der Motorhaube 1 die homogene Massenverteilung gemäss Anspruch 10 überprüft wird. Die Bezugsflächen 37 von der Grösse eines Kreises mit dem Durchmesser 25 cm werden beliebig im Kopfaufprallbereich 2 verschoben. An jeder Stelle darf dabei das ermittelte Flächengewicht nicht mehr als 20 % vom gemittelten Flächengewicht der Motorhaube selbst abweichen.

## Patentansprüche

1. Motorhaube (1) für Kraftfahrzeuge, die zum Schutz von Fussgängem bei einer Kollision mit dem Kraftfahrzeug eine deformierbare Kopfaufprallzone (2) aufweist, die Motorhaube (1) aus zwei oder mehr tragenden Schalen aufgebaut ist, von denen die aussenliegende Aussenschale die Aussenseite der Motorhaube als Fahrzeugkontur darstellt, und von denen mindestens eine der innenliegenden Innenschalen als Verstärkungsschale mit der Aussenschale verbunden ist, die Motorhaube (1) mittels an ihren Randbereichen angebrachten Auflagern wie Haubenscharniere, Schlösser und Anschlagpuffer mit der Karosserie verbunden ist oder auf dieser liegt,
**dadurch gekennzeichnet, dass**
die Motorhaube (1) im Bereich der Kopfaufprallzone (2) folgende Biegesteifigkeiten aufweist:
- neben den Auflagerbereichen (4) überwiegend kleiner oder gleich einem ersten Wert B1,
- in der Mitte überwiegend grösser oder gleich einem zweiten Wert B2, und
- in den dazwischenliegenden Bereichen überwiegend grösser als der Wert B1 und kleiner als der Wert B2, wobei B2 grösser ist als B1.

2. Motorhaube nach Anspruch 1,
**dadurch gekennzeichnet, dass**
die Summe der Dicken aller Schalen im Bereich der Kopfaufprallzone (2) folgende Werte aufweisen:
- neben den Auflagerbereichen (4) überwiegend kleiner oder gleich einem ersten Wert T1.
- in der Mitte überwiegend grösser oder gleich einem zweiten Wert T2, und
- in den dazwischenliegenden Bereichen überwiegend grösser als der Wert T1 und kleiner als der Wert T2, wobei T2 grösser ist als T1.

3. Motorhaube nach Anspruch 1,
**dadurch gekennzeichnet, dass**
die Aussen- und Verstärkungsschale im Bereich der Kopfaufprallzone (2) folgende Abstände aufweisen, wobei für den Abstand der Verstärkungsschale deren innere Hüllkurve zugrundegelegt wird:
- neben den Auflagerbereichen (4) überwiegend kleiner oder gleich einem ersten Wert H1,
- in der Mitte überwiegend grösser oder gleich einem zweiten Wert H2, und
- in den dazwischenliegenden Bereichen überwiegend grösser als der Wert H1 und kleiner als der Wert H2, wobei H2 grösser ist als H1.

4. Motorhaube nach Anspruch 1,
**dadurch gekennzeichnet, dass**
die Schalenmaterialen im Bereich der Kopfaufprallzone (2) folgende Elastizitätsmodule aufweisen:
- neben den Auflagerbereichen (4) überwiegend kleiner oder gleich einem ersten Wert E1,
- in der Mitte überwiegend grösser oder gleich einem zweiten Wert E2, und
- in den dazwischenliegenden Bereichen überwiegend grösser als der Wert E1 und kleiner als der Wert E2, wobei E2 grösser ist als E1.

5. Motorhaube nach einem der vorhergehenden Ansprüche,
**dadurch gekennzeichnet, dass** die Verstärkungsschale (19) mit Sicken ausgeführt ist, die an der Aussenschale (28) anliegenden Sickenflansche (27) mit der Aussenschale verbunden sind und die Biegesteifigkeit einer jeden Sicke (24) zwischen zwei Knotenpunkten (26) sich im Bereich der Kopfaufprallzone (4) aus den Abmessungen der Sicke (24) und der Aussenschale (28) an einem senkrechten Schnitt zur neutralen Faser (25) der Sicke (24) zwischen den beiden Knotenpunkten (26) bestimmt.

6. Motorhaube nach Anspruch 5,
**dadurch gekennzeichnet, dass**
die Sicken in der Verstärkungsschale im Bereich der Kopfaufprallzone (2) folgende Breiten aufweisen:
- neben den Auflagerbereichen (4) überwiegend kleiner oder gleich einem ersten Wert S1,
- in der Mitte überwiegend grösser oder gleich einem zweiten Wert S2, und
- in den dazwischenliegenden Bereichen überwiegend grösser als der Wert S1 und kleiner als der Wert S2, wobei S2 grösser ist als S1.

7. Motorhaube nach Anspruch 6,
**dadurch gekennzeichnet, dass** im Bereich der Kopfaufprallzone (2) die Sicken in der Verstärkungsschale als Hut-Profile geformt sind und die Knoten der Sicken überwiegend durch drei ineinanderlaufende Hut-Profile gebildet werden.

8. Motorhaube nach einem der vorhergehenden Ansprüche,
**dadurch gekennzeichnet, dass**
im Bereich der Kopfaufprallzone die Biegesteifigkeiten der Motorhaube, die Summe der Schalendicken, die Abstände von Aussen- und Verstärkungsschale, die Elastizitätsmodule der Schalenmaterialien und die Breite der Sicken von den Auflagern zu den Rändern und von den Rändern zur Mitte hin im wesentlichen stetig und ansteigend verlaufen.

9. Motorhaube nach einem der vorhergehenden Ansprüche,
**dadurch gekennzeichnet, dass** die Aussenschale (32) und mindestens eine Verstärkungsschale (33) durch mindestens eine dazwischenliegende Stützschale (31) fest verbunden sind.

10. Motorhaube nach einem der vorhergehenden Ansprüche,
**dadurch gekennzeichnet, dass** die Motorhaube (1) ohne Auflager eine annähernd homogene Massenverteilung aufweist derart, dass alle Teilflächen (37) von der Grösse einer Bezugsfläche, welche auf der äusseren Abwicklung der Motorhaube (1) in der Kopfaufprallzone (2) mit Ausnahme der Auflagerbereiche (4) gebildet werden können, ein im wesentlichen gleiches Flächengewicht aufweisen bei einer zulässigen Abweichung von höchstens 20 % vom gemittelten Flächengewicht der Motorhaube (1) ohne Auflager.

11. Motorhaube nach Anspruch 10
**dadurch gekennzeichnet, dass**
das Material einer Stützschale folgende unterschiedliche Dichten aufweist:
- in der Mitte überwiegend kleiner oder gleich einem ersten Wert D1,
- neben den Auflagerbereichen (4) überwiegend grösser oder gleich einem zweiten Wert D2, und
- in den dazwischenliegenden Bereichen überwiegend grösser als der Wert D1 und kleiner als der Wert D2, wobei D2 grösser ist als D1.

## Claims

1. Bonnet (1) for vehicles which for the protection of pedestrians in the event of a collision with the vehicle has a deformable head impact zone (2), the bonnet (1) is formed from two or more carrying shells, of which the outer-lying outer shell represents the outer side of the bonnet as a vehicle contour, and of which at least one of the inner-lying inner shells is connected as a reinforcement shell to the outer shell, the bonnet (1) is connected to the bodywork or lies on it by means of supports, positioned on its edge areas such as bonnet hinges, locks and stop buffers
**characterised in that**
the bonnet (1) in the area of the head impact zone (2) has the following bending strengths:
- predominantly smaller than or equal to a first value B1 beside the support areas (4)
- predominantly greater than or equal to a second value B2 in the middle
- predominantly greater than the value B1 and smaller than the value B2, whereby B2 is greater than B1, in the areas lying in-between.

2. Bonnet according to Claim 1
**characterised in that**
the sum of the thicknesses of all shells in the area of the head impact zone (2) have the following values:
- predominantly smaller than or equal to a first value T1 beside the support areas (4)
- predominantly greater than or equal to a second value T2 in the middle and
- predominantly greater than the value T1 and smaller than the value T2, whereby T2 is greater than T1, in the areas lying in-between.

3. Bonnet according to Claim 1
**characterised in that** the outer and reinforcement shell in the area of the head impact zone (2) have the following intervals, whereby for the interval of the reinforcement shell the inner envelope curve thereof is used as a basis:
- predominantly smaller than or equal to a first value H1 beside the support areas (4)
- predominantly greater than or equal to a second value H2 in the middle and
- predominantly greater than the value H1 and smaller than the value H2, whereby H2 is greater than H1, in the areas lying in-between.

4. Bonnet according to Claim 1
**characterised in that**
the shell materials in the area of the head impact zone (2) have the following elasticity modules:
- predominantly smaller than or equal to a first value E1 beside the support areas (4)
- predominantly greater than or equal to a second value E2 in the middle and
- predominantly greater than the value E1 and smaller than the value E2, whereby E2 is greater than E1, in the areas lying in-between.

5. Bonnet according to one of the preceding claims
**characterised in that**
the reinforcement shell (19) is formed with beads, the bead flanges (27) lying on the outer shell (28) are connected to the outer shell, and the bending strength of each bead (24) between two intersection points (26) is determined in the area of the head impact zone (4) from the dimensions of the bead (24) and of the outer shell (28) on a perpendicular section to the neutral fibre (25) of the bead (24) between the two intersection points (26).

6. Bonnet according to Claim 5
**characterised in that** the beads in the reinforcement shell in the area of the head impact zone (2) have the following breadths:
- predominantly smaller than or equal to a first value S1 beside the support areas (4)
- predominantly greater than or equal to a second value S2 in the middle and
- predominantly greater than the value S1 and smaller than the value S2, whereby S2 is greater than S1, in the areas lying in-between.

7. Bonnet according to Claim 6
**characterised in that**
in the area of the head impact zone (2) the beads are formed in the reinforcement shell as cap profiles and the junctions of the beads are formed predominantly through three cap profiles running into each other.

8. Bonnet according to one of the preceding claims
**characterised in that**
in the area of the head impact zone the bending strength of the bonnet, the sum of the shell thicknesses, the intervals of outer and reinforcement shells, the elasticity modules of the shell materials and the breadth of the beads from the supports to the edges and from the edges to the middle are essentially continuous and run in an increasing way.

9. Bonnet according to one of the preceding claims
**characterised in that**
the outer shell (32) and at least one reinforcement shell (33) are securely connected through at least one support shell (31) lying in-between.

10. Bonnet according to one of the preceding claims
**characterised in that**
the bonnet (1) without supports has a virtually homogenous mass distribution in such a way that all part areas (37) of the size of a reference area, which can be formed on the outer course of the bonnet (1) in the head impact zone (2) with the exception of the support areas (4), have an area weight which is essentially the same with an admissible deviation of 20% at the most from the calculated area weight of the bonnet (1) without supports.

11. Bonnet according to Claim 10
**characterised in that**
the material of a support shell has the following different densities:
- predominantly smaller than or equal to a first value D1 in the middle
- predominantly greater than or equal to a second value D2 beside the support areas (4) and
- predominantly greater than the value D1 and smaller than the value D2, whereby D2 is greater than D1, in the areas lying in-between.

## Revendications

1. Capot moteur (1) pour véhicules qui présente une zone d'impact de la tête déformable (2) pour la protection de piétons en cas de collision avec le véhicule, le capot (1) étant constitué de deux coques porteuses ou plus, dont la coque extérieure représente le côté extérieur du capot comme contour du véhicule, et dont au moins une des coques intérieures est raccordée à la coque extérieure comme coque de renforcement, le capot (1) étant raccordé à la carrosserie ou reposant sur celle-ci au moyen de supports installés sur ses bords, tels que des charnières de capot, serrures et butoirs d'arrêt, **caractérisé en ce que** le capot (1) présente les rigidités à la flexion suivantes dans la partie de la zone d'impact de la tête (2) :
- à côté des parties des supports (4) principalement inférieures ou égales à une première valeur B1,
- au milieu principalement supérieures ou égales à une deuxième valeur B2, et
- dans les parties intermédiaires principalement supérieures à la valeur B1 et inférieures à la valeur B2, B2 étant supérieure à B1.

2. Capot selon la revendication 1, **caractérisé en ce que** la somme des épaisseurs de toutes les coques dans la zone d'impact de la tête (2) présente les valeurs suivantes :
- à côté des parties des supports (4) principalement inférieures ou égales à une première valeur T1,
- au milieu principalement supérieures ou égales à une deuxième valeur T2, et
- dans les parties intermédiaires principalement supérieures à la valeur T1 et inférieures à la valeur T2, T2 étant supérieure à T1.

3. Capot selon la revendication 1, **caractérisé en ce que** la coque extérieure et la coque intérieure dans la zone d'impact de la tête (2) présentent les écarts suivants, l'enveloppante intérieure de la coque de renforcement étant prise pour base de l'écart de cette coque :
- à côté des parties des supports (4) principalement inférieures ou égales à une première valeur H1,
- au milieu principalement supérieures ou égales à une deuxième valeur H2, et
- dans les parties intermédiaires principalement supérieures à la valeur H1 et inférieures à la valeur H2, H2 étant supérieure à H1.

4. Capot selon la revendication 1, **caractérisé en ce que** les matériaux des coques dans la zone de l'impact de la tête (2) présentent les modules d'élasticité suivants :
- à côté des parties des supports (4) principalement inférieures ou égales à une première valeur E1,
- au milieu principalement supérieures ou égales à une deuxième valeur E2, et
- dans les parties intermédiaires principalement supérieures à la valeur E1 et inférieures à la valeur E2, E2 étant supérieure à E1.

5. Capot selon l'une des revendications précédentes, **caractérisé en ce que** la coque de renforcement (19) est réalisée avec des bandes de renforcement ou des moulures reliées à la coque extérieure (28) par des brides de moulures ou de bandes (27) adjacentesà la coque extérieure et **en ce que** la rigidité à la flexion de chaque bande de renforcement (24) entre deux noeuds est définie, dans la zone d'impact de la tête (4), à partir des dimensions de la bande de renforcement (24) et de la coque extérieure (28) sur une coupe perpendiculaire à la fibre neutre (25) de la bande de renforcement (24) entre les deux noeuds (26).

6. Capot selon la revendication 5, **caractérisé en ce que** les bandes de renforcement dans la coque de renforcement dans la zone d'impact de la tête (2) présentent les largeurs suivantes :
- à côté des parties des supports (4) principalement inférieures ou égales à une première valeur S1,
- au milieu principalement supérieures ou égales à une deuxième valeur S2, et
- dans les parties intermédiaires principalement supérieures à la valeur S1 et inférieures à la valeur S2, S2 étant supérieure à S1.

7. Capot selon la revendication 6, **caractérisé en ce que** dans la zone d'impact de la tête (2) les bandes de renforcement ou moulures situées dans la coque de renforcement sont formées comme des profilés chapes ou chapeaux et les noeuds des bandes de renforcement sont formés principalement par trois profilés chapeaux entrecroisés.

8. Capot selon l'une des revendications précédentes, **caractérisé en ce que** dans la zone d'impact de la tête les rigidités à la flexion du capot, la somme des épaisseurs des coques, les écarts entre la coque extérieure et la coque de renforcement, les modules d'élasticité des matériaux de la coque et la largeur des bandes de renforcement des supports aux bords et des bords vers le centre sont essentiellement continus et croissants.

9. Capot selon l'une des revendications précédentes, **caractérisé en ce que** la coque extérieure (32) et au moins une coque de renforcement (33) sont reliées de manière fixe par au moins une coque de support intermédiaire (31).

10. Capot l'une des revendications précédentes, **caractérisé en ce que** le capot (1) sans support présente une répartition des masses presque homogène, de telle sorte que toutes les surfaces partielles (37) de la taille d'une surface de référence, qui, dans la zone d'impact de la tête à l'exception de la partie des supports (4), peuvent être formées sur le développement extérieur du capot (1), présentent une épaisseur massique essentiellement égale avec admission d'une déviation d'au maximum 20% par rapport à l'épaisseur massique calculée pour le capot (1) sans support.

11. Capot selon la revendication 10, **caractérisé en ce que** le matériau d'une coque de support présente les épaisseurs différentes suivantes :
- au milieu principalement inférieures ou égales à une première valeur D1,
- à côté des parties des supports (4) principalement supérieures ou égales à une première valeur D2,
- dans les parties intermédiaires principalement supérieures à la valeur D1 et inférieures à la valeur D2, D2 étant supérieure à D1.
